## Europäisches Patentamt

## European Patent Office

## Office européen des brevets

(11) Veröffentlichungsnummer: **0 232 711**
**B1**

---

(12) **EUROPÄISCHE PATENTSCHRIFT**

---

(45) Veröffentlichungstag der Patentschrift:
23.11.88

(21) Anmeldenummer: **87100149.1**

(22) Anmeldetag: **06.01.87**

(51) Int. Cl.⁴: **C 04 B 35/58**, B 24 D 3/00

---

(54) **Schneidplatte.**

---

(30) Priorität: **03.02.86 DE 3603191**

(43) Veröffentlichungstag der Anmeldung:
**19.08.87 Patentblatt 87/34**

(45) Bekanntmachung des Hinweises auf die Patenterteilung:
**23.11.88 Patentblatt 88/47**

(84) Benannte Vertragsstaaten:
**DE FR GB**

(56) Entgegenhaltungen:
**US-A-3 409 416**

**Derwent Accession Nr. 80-74 550c, Questel Telesystem (WPIL), Derwent Publications Ltd., London**

(73) Patentinhaber: **Feldmühle Aktiengesellschaft, Fritz-Vomfelde- Platz 4, D-4000 Düsseldorf 1 (DE)**

(72) Erfinder: **Friederich, Kilian, Dr. Dipl.- Ing., Hohenstaufenstrasse 20, D-7310 Plochingen (DE)**
Erfinder: **Dworak, Ulf, Dr. Dipl.- Mineraloge, Pfarrstrasse 50, D-7066 Baltmannsweiler 2 (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Schneidplatte gemäß dem Gattungsbegriff des Hauptanspruches sowie die Verwendung der Schneidplatte zur spanabhebenden Bearbeitung eines Eisenwerkstoffes mit einem Kohlenstoffgehalt bis zu 1,2 %.

Für die zerspanende Bearbeitung von Stählen wurden in der Vergangenheit sogenannte Hartmetallwerkstoffe eingesetzt, die aus Mischungen mehrerer Metallkarbide, vorwiegend Wolfram- und Titankarbid und zumeist Kobalt als Bindemetall bestehen.

Weiterentwicklungen dieser Werkstoffe führten zu den aus der AT-B-266 465 bekannten Schneidstoffzusammensetzungen, bei denen ein oder mehrere Nitride aus der Gruppe Titan-, Aluminium-, Niob-, Vanadin-, Zirkon-, Tantal-, Hafniumnitrid in einer Menge von 1 bis 99 Vol.-Teilen, pro Vol.-Teil eines Metalls aus der Gruppe Eisen, Kobalt, Nickel und deren Legierungen dispergiert sind, wobei die Gesamtzusammensetzung noch 1 bis 95 Vol.-% einer hitzebeständigen Aluminiumverbindung, wie z. B. $Al_2O_3$, $Al_4C_3$, bezogen auf den Gesamtteil an nicht metallischen Komponenten, enthält.

In ähnlicher Weise lehrt die US-A-3 409 416 die Verwendung von Molybdän, Wolfram, Rhenium, deren Legierungen untereinander und mit Chrom und deren Legierung mit einem geringen Anteil eines Metalls, ausgewählt aus der Gruppe von Aluminium, Titan, Zirkonium, Hafnium, Vanadium, Niob, Tantal, Mangan, Eisen, Kobalt und Nickel, statt der in der AT-B-266 465 erwähnten Bindemetalle,

Ein weiteres Mal wird zur Herstellung von hochtemperaturfesten Werkstoffen und Schneidwerkzeugen die gemeinsame Anwendung von Bindemetallen, wie Eisen, Kobalt und Nickel oder deren Legierungen mit Nitriden von Titan, Aluminium, Niob, Vanadium, Zirkonium, Tantal und/oder Hafnium sowie einem Zusatz einer hitzebeständigen Aluminiumverbindung in der DE-B-1 295 855 angegeben, wobei die angegebenen Nitride bis zu 95 % durch die Nitride von Beryllium, Bor, Thorium, Uran oder Boride von Titan, Zirkonium, Cer, Wolfram, Molybdän, Chrom oder durch Karbide von Titan, Zirkonium, Tantal, Niob oder durch Oxide von Zirkonium, Magnesium oder Thorium ersetzt sein können.

Der gemeinsame Nachteil dieser die Verwendung von Bindemetallen zwingend vorschreibenden Schriften liegt in der durch die Verwendung von metallischen Komponenten herabgesetzten Temperaturbeständigkeit. Werden Molybdän und Wolfram als Bindemetall verwendet, besteht bei erhöhter Temperaturbeanspruchung die Gefahr des Verzunderns, wohingegen die üblichen anderen Bindemetalle, insbesondere Nickel, Eisen und Kobalt eine relativ niedrige Erweichungstemperatur aufweisen, deren Überschreiten zur plastischen Verformung der Schneidplatte und damit zum Standzeitende führt.

In der US-A-3 108 887 wurde auch bereits ein Werkstoff vorgeschlagen, der als Hauptkomponente Aluminiumnitrid in einer Menge von mehr als 50 % vorsieht. Als weitere Zusätze werden die Sauerstoff-, Bor-, Stickstoff-, Silizium- und Kohlenstoffverbindungen von Aluminium, Bor, Silizium und Seltenen Erden sowie der sogenannten Übergangsmetalle, wie z. B. Titan und Zirkonium vorgeschlagen.

Die Beispiele dieser Schrift geben Zusammensetzungen von 96 und 80 Gew.-% AlN, Rest $Al_2O_3$ und Verunreinigungen an. Vorgeschlagen werden diese Zusammensetzungen für die Herstellung von Bauteilen für Raketenmotoren, wie z. B. Raketendüsen und zur Behandlung von geschmolzenen Metallen. Die Härte dieses Werkstoffes wird mit 7 bis 8 entsprechend der Mohsskala, bzw. mit 1200 nach Knoop angegeben. Die Bruchfestigkeit bei Raumtemperatur beträgt 38,500 psi entsprechend 265 MPa. Die geringe Härte und die niedrige Festigkeit machen deutlich, daß dieser Werkstoff noch nicht zur Herstellung von Schneidplatten, insbesondere nicht von Schneidplatten, die zur Bearbeitung von Eisenwerkstoffen dienen können, geeignet ist.

Es wurden auch bereits Schneidplattenwerkstoffe auf Basis von Aluminiumoxid mit verschiedenen Zusätzen, insbesondere von Zirkoniumoxid vorgeschlagen, so sehen die Beispiele der DE-A-2 741 295 neben Zirkoniumoxid noch die Zugabe von Titankarbid, Titannitrid, $Y_2O_3$ und Metallen, wie Molybdän und Nickel zu einem Werkstoff auf Basis Aluminiumoxid vor.

Demgegenüber schlägt die DE-A-2 923 213 Zusammensetzungen auf Basis von Aluminiumoxid, Zirkoniumoxid und Magnesiumoxid vor, wobei das Zirkoniumoxid jedoch nicht stabilisiert ist. Mit diesen, vorwiegend auf Basis von oxidkeramischen Werkstoffen hergestellten Schneidplatten konnten zwar bisher nicht für möglich gehaltene Leistungssteigerungen erzielt werden, jedoch reichen diese Leistungen in vielen Fällen noch nicht aus und insbesondere bei der zerspanenden Bearbeitung von Eisenwerkstoffen mit niedrigem Kohlenstoffgehalt - also: Stählen - besteht die ständige Forderung nach noch leistungsfähigeren Schneidplatten. Da generell hohe Schnittgeschwindigkeiten erwünscht sind, bei denen es in der Schneidplatte zu einer hohen Temperaturbelastbarkeit kommt, wird insbesondere eine Verbesserung der Temperaturbelastbarkeit, vor allem aber der Termoschockbeständigkeit angestrebt. Schneidplatten mit einer besseren Termoschockbeständigkeit werden insbesondere für kurze Eingriffszeiten, unterbrochene Schnitte und Drehoperationen mit ungleicher Schnittiefe gewünscht. Für diese Einsatzgebiete werden z.Zt. noch überwiegend Hartmetalle eingesetzt, da die bekannten Oxidkeramiken für diesen Zweck eine nicht ausreichende Termoschockbeständigkeit aufweisen. Dabei muß jedoch der Nachteil niedriger Schnittgeschwindigkeiten in Kauf genommen werden, da die verwendeten Bindemetalle nur über eine geringe Temperaturbelastbarkeit verfügen.

Die vorliegende Erfindung hat sich die Aufgabe gestellt, die anstehenden Probleme zu überwinden und eine Schneidplatte mit verbesserter Temperaturbelastbarkeit, insbesondere mit einer verbesserten Thermoschockbeständigkeit zu entwickeln.

Diese Aufgabe wird bei einer Schneidplatte gemäß dem Gattungsbegriff von Patentanspruch 1 durch die kennzeichnenden Merkmale des Patentanspruches 1 gelöst. Die erfindungsgemäße Schneidplatte hat sich insbesondere für den Einsatz bei hohen Schnittgeschwindigkeiten zur Bearbeitung von Eisenwerkstoffen mit einem Kohlenstoffgehalt < 1,2 % als hervorragend geeignet erwiesen und zeigt dabei eine ausgezeichnete Temperaturbelastbarkeit. Auch bei kurzen Eingriffszeiten, unterbrochenen Schnitten und Drehoperationen mit ungleicher Schnittiefe zeigt es sich, daß die erfindungsgemäße Schneidplatte über eine ausgezeichnete Thermoschockbeständigkeit verfügt. Die hohe Temperaturbelastbarkeit ergibt sich, da bei der erfindungsgemäßen Schneidplattenzusammensetzung auf die Anwendung von Bindemetallen verzichtet wird. Die hohe Thermoschockbeständigkeit erklärt sich voraussichtlich infolge der hohen Wärmeleitfähigkeit und des geringen thermischen Ausdehnungskoeffizienten von Aluminiumnitrid als überwiegender Komponente der erfindungsgemäßen Schneidplatte. Dennoch muß die Eignung der Schneidplatte für die Bearbeitung von Eisenwerkstoffen mit Kohlenstoffgehalten unter 1,2 % insofern als überraschend angesehen werden, als Aluminiumnitrid im Vergleich zu den bekannten Schneidplattenwerkstoffen Aluminiumoxid, Zirkonoxid sowie Hartmetallen über eine wesentlich geringere Härte verfügt.

Neben dem Verzicht auf Bindemetalle ist der Erfolg der vorliegenden Erfindung auch in einem sehr hohen Reinheitsgehalt der vorgeschlagenen Zusammensetzung zu sehen, wobei Verunreinigungen, wie z. B. freier Kohlenstoff oder in unvermeidbarer Weise entstehender Metallabrieb, eine Größenordnung von max. 0,3 Vol.-%, bevorzugt 0,1 Vol.-%, nicht überschreiten dürfen.

Weitere bevorzugte Ausführungsformen der Erfindung sind durch die Unteransprüche gekennzeichnet.

Sofern Mischungen von Hartstoffen verwendet werden, hat sich bei einer Mischung aus Titankarbid und Titandiborid eine Mischung als besonders geeignet erwiesen, in der jeder dieser beiden Hartstoffe in einer Menge von mindestens 8 und höchstens 11 Vol.-%, aber in einer 15 bis 22 Vol.-% insgesamt nicht überschreitenden Menge eingesetzt werden. Sofern eine Hartstoffmischung aus Titannitrid und Titandiborid zum Einsatz kommt, ist besonders bevorzugt, daß jede dieser beiden Komponenten in einer Menge von mindestens 8 und höchstens 11 Vol.-%, insgesamt aber nicht mehr als 22 Vol.-%, verwendet wird.

Bei der Herstellung der erfindungsgemäßen Schneidplatte kommen sowohl das drucklose Sinterverfahren als auch das sogenannte Heißpressverfahren zur Anwendung. Bei drucklosem Sintern hat sich die Verwendung von Sinterhilfsmitteln, insbesondere von $Al_2O_3$, $CaO$, $SiO_2$ und $Y_2O_3$ alleine oder in Abmischung als besonders zweckmäßig erwiesen. Zur Erzeugung der optimalen Schneidplattenqualität soll die Schneidplatte über eine theoretische Dichte von mindestens 95 % des Wertes verfügen, der sich aus der errechneten Dichte der verwendeten Ausgangsstoffmischung ergibt. Zur Sinterung der erfindungsgemäßen Schneidplatte ist die Anwendung einer Schutzgasatmosphäre, vorzugsweise von Stickstoffatmosphäre, bei atmosphärischem Druck notwendig. Die Sintertemperaturen liegen bei drucklosen Sintern zwischen 1650 und 2040° C, bei Sinterzeiten von 0,5 bis 5 h, wohingegen das Heißpressen bei etwas niedrigeren Temperaturen von 1450 bis 1750° C und bei einer Haltezeit von 0,5 bis 2 h durchgeführt wird. In ähnlicher Weise ist die Verdichtung durch Gasdrucksintern oder durch heißisostatisches Nachpressen möglich.

Die nachfolgenden Beispiele dienen der weiteren Erklärung der Erfindung:

**Beispiel 1 bis 3:**

Entsprechend den Angaben in der unten stehenden Tabelle 1 wurden Aluminiumnitrid und Hartstoffe in einer Rührwerkskugelmühle intensiv vermahlen und gemischt. Als Mahlmedium wurde Benzin verwendet. Als Mahlkörper wurden Kugeln aus Aluminiumoxid verwendet und dabei ein Mahlabrieb von 2 Gew.-%, bezogen auf die trockene Pulvermischung, ermittelt. Nach Abdampfen des Benzins und Sieben der trockenen Pulvermischung durch ein 630 µm-Sieb wurden Schneidplatten durch Heißpressen in einer Graphitmatrize bei 1550° C, 1 h Verweilzeit und bei einem Preßdruck von 380 Kp/cm² in Stickstoffatmosphäre hergestellt. Die erreichten Dichten entsprachen sämtlich 100 % des errechneten Wertes der Ausgangsmischung. In den fertigen Schneidplatten lag das Aluminiumnitrid in einer Teilchengröße von 1,5 µm vor, die Hartstoffe verfügten über eine Teilchengröße von 3 µm. Die Vickershärte der Schneidplatten betrug 1650.

**Tabelle 1:**

|  | Gew.-% AIN | Gew.-% TiC | Gew.-% TiN | Gew.-% $TiB_2$ | Vol.-% Hartstoff |
|---|---|---|---|---|---|
| Beisp. 1: | 73,4 | 24,6 | - | - | 20 |
| Beisp. 2: | 69,5 | - | 28,5 | - | 20 |
| Beisp. 3: | 74,8 | 11,7 | - | 13,5 | 20 |

Außer den in der vorstehenden Tabelle aufgeführten Hartstoffen, setzten sich die Schneidplatten noch aus einer Matrix von Aluminiumnitrid und Aluminiumoxid als Sinterhilfsmittel zusammen.

An den Schneidplatten wurden die aus Tabelle 2 ersichtlichen Werte ermittelt.

**Tabelle 2:**

|  | σbB, RT (MPa) | σbB, 1200°C (MPa) | Mohshärte |
|---|---|---|---|
| Beisp. 1: | 400 ± 40 | 410 ± 45 | > 9 |
| Beisp. 2: | 540 ± 60 | 330 ± 30 | " |
| Beisp. 3: | 390 ± 60 | 370 ± 60 | " |

Bei Schenidplatten aus AIN mit einem Anteil von 15 bzw. 28,5 Vol.-% TiC betrug die gemessene Mohshärte > 9, bzw. betrug der $H_v$-Wert (Vickers-Härte) 1360 bzw. 1470.

Die Schneidplatten wurden zur Stahlbearbeitung bei Schnittgeschwindigkeiten von 600 m/min eingesetzt und erreichten dabei Standzeiten von 6 min. Außerdem erwiesen sich die Schneidplatten als geeignet, um kurze Schnitte von 2 bis 5 sek Dauer bei Schnittgeschwindigkeiten von 600 m/min aufzuführen. Es wurden dabei Eingriffszeiten von 5 min erreicht.

Vergleichsversuche mit Schneidplatten aus Hartmetall bzw. beschichtetem Hartmetall versagten bei diesen Geschwindigkeiten aufgrund plastischer Verformung, zu der es infolge der hohen Temperaturen kam. Ein weiterer Vergleichsversuch mit Schneidplatten aus bekannter $Al_2O_3/ZrO_2$-Keramik zeigte bei den beschriebenen Kurzschnittversuchten ein negatives Ergebnis, weil offensichtlich die Thermoschockbeständigkeit dieser Schneidwerkstoffe nicht hoch genug war.

Die Schneidversuche wurden einheitlich mit Schneidplatten einer Geometrie: SNGN 120816 T 02020 und mit Stahl CK 45 durchgeführt.

**Beispiel 4 und 5:**

Aluminiumnitrid, Sinterhilfsmittel und Hartstoffe wurden entsprechend der unten stehenden Tabelle 2 analog zu den Beispielen 1 bis 3 aufbereitet. Zusätzlich wurde nach der Mischmahlung ein übliches organischen Preßhilfsmittel in einer Konzentration von 3 Gew.-% zugefügt. Nach der Formgebung durch axiales Pressen wurde das Preßhilfsmittel in Stickstoffatmosphäre ausgeheizt. Die Formlinge wurden drucklos in Stickstoffatmosphäre bei 1730°C und einer Verweilzeit von 4,5 h gesintert. Die erreichten Dichtewerte lagen bei > 99,5 % des aus der Pulvermischung berechneten theoretischen Wertes. Die erzielten Teilchengrößen betrugen 2 μm beim Aluminiumnitrid, sowie 3 μm bei den Hartstoffen. Die Vickershärte lag bei > 1600.

**Tabelle 3:**

|  | Gew.-% AIN | Gew.-% $Al_2O_3$ | Gew.-% $Y_2O_3$ | Gew.-% WC | Gew.-% NbC | Gew.-% $NbB_2$ |
|---|---|---|---|---|---|---|
| Bsp. 4: | 48 | 7 | - | 45 | - | - |
| Bsp. 5: | 57 | - | 4,6 | - | 20,3 | 18,1 |

Die Schneidplatten setzten sich zusammen aus:

**Beispiel 4:**

75,9 Vol.-% AlN/9,1 Vol.-% $Al_2O_3$ und 15 Vol.-% WC

**Beispeil 5:**

74 Vol.-% AlN/4 Vol.-% $Y_2O_3$/22 Vol.-% Hartstoff, bestehend aus NbC und $NbB_2$.

**Patentansprüche**

1. Schneidplatte für die Bearbeitung von Eisenwerkstoffen aus einem gesinterten Keramikwerkstoff mit einem Anteil von mindestens 70 Vol.-% Aluminiumnitrid, in dem als Hartstoffe Karbide, Nitride und Boride von Titan, Wolfram, und Niob und als weitere Komponente metalloxidische Verbindungen gleichmäßig verteilt sind, dadurch gekennzeichnet, daß die Hartstozfe in einer Menge von 7 bis 29 Vol.-% die metalloxidischen Verbindungen in einer Menge von 1 bis 15 Vol.-% vorliegen und sich zusammen mit Aluminiumnitrid auf mindestens 99,7 Vol.-% ergänzen, die Schneidplatte nicht mehr als 0,3 Vol.-% an Verunreinigungen enthält und die Schneidplatte eine Mohshärte > 9 aufweist.

2. Schneidplatte nach Anspruch 1, dadurch gekennzeichnet, daß die Schneidplatte als Hartstoffe Titankarbid, Titannitrid, Titandiborid, Wolframkarbid, Niobkarbid, Niobborid oder eine Mischung dieser Substanzen enthält.

3. Schneidplatte nach einem der Ansprüche 1 und 2, dadurch gekennzeichnet, daß die Schneidplatte als Hartstoffe in einer Menge von 10 bis 25 Vol.-% enthält.

4. Schneidplatte nach einem der Ansprüche 1 bis 3, dadurch gekennzeichnet, daß die Schneidplatte als metalloxidische Verbindungen Yttriumoxid, Aluminiumoxid, Kalziumoxid und Siliziumdioxid enthält.

5. Schneidplatte nach einem der Ansprüche 1 bis 4, dadurch gekennzeichnet, daß die Schneidplatte metalloxidische Verbindungen in einer Menge von 2 bis 8 Vol.-% enthält.

6. Schneidplatte nach einem der Ansprüche 1 bis 5, dadurch gekennzeichnet, daß die Schneidplatte als Hartstoff 15 bis 22 Vol.-% Titankarbid enthält.

7. Schneidplatte nach einem der Ansprüche 1 bis 5, dadurch gekennzeichnet, daß die Schneidplatte als Hartstoff 15 bis 22 Vol.-% Titannitrid enthält.

9. Schneidplatte nach einem der Ansprüche 1 bis 5, dadurch gekennzeichnet, daß die Schneidplatte als Hartstoff 15 bis 22 Vol.-% einer aus Titankarbid und Titandiborid bestehenden Mischung enthält.

9. Schneidplatte nach einem der Ansprüche 1 bis 5, dadurch gekennzeichnet, daß die Schneidplatte 15 bis 22 Vol.-% einer Mischung aus Titannitrid und Titandiborid enthält.

10. Schneidplatte nach einem der Ansprüche 1 bis 9, dadurch gekennzeichnet, daß die Schneidplatte heißgepreßt ist.

11. Schneidplatte nach einem der Ansprüche 1 bis 9, dadurch gekennzeichnet, daß die Schneidplatte drucklos gesintert ist und metalloxidische Verbindungen in einer Menge von mindestens 3 Vol.-% enthält.

12. Schneidplatte nach einem der Ansprüche 1 bis 11, dadurch gekennzeichnet, daß die Schneidplatte eine Biegebruchfestigkeit $\sigma_B$ bei Raumtemperatur > 350 MPa und bei 1200° C > 300 MPa aufweist.

13. Verwendung der Schneidplatte nach einem der Ansprüche 1 bis 12 für die spanabhebende Bearbeitung von Eisenmetallen bis zu einem C-Gehalt von 1,2 %.

**Claims**

1. A cutting plate for the machining of ferrous materials, made of a sintered ceramic material having a proportion of at least 70 % by volume of aluminium nitride, wherein as mechanically resistant materials carbides, nitrides and borides of titanium, tungsten and niobium, and as further components metal oxide compounds, are uniformly distributed, characterised in that the mechanically resistant materials are present in an amount of from 7 to 29 % by volume and the metal oxide compounds are present in an amount of from 1 to 15 % by volume, amounting together with aluminium nitride to at least 99,7 % by volume, the cutting plate contains no more than 0,3 % by volume of impurities, and the cutting plate has a Mohs' hardness of > 9.

2. A cutting plate according to Claim 1, characterised in that the cutting plate contains as mechanically resistant materials titanium carbide, titanium nitride, titanium diboride, tungsten carbide, niobium carbide, niobium boride or a mixture of these substances.

3. A cutting plate according to one of Claims 1 and 2, characterised in that the cutting plate contains mechanically resistant materials in an amount of from 10 to 25 % by volume.

4. A cutting plate according to one of Claims 1 to 3, characterised in that the cutting plate contains as metal oxide compounds yttrium oxide, aluminium oxide, calcium oxide and silicon dioxide.

5. A cutting plate according to one of Claims 1 to 4, characterised in that the cutting plate contains metal oxide compounds in an amount of from 2 to 8 % by volume.

6. A cutting plate according to one of Claims 1 to 5, characterised in that the cutting plate contains as mechanically resistant material from 15 to 22 % by volume of titanium carbide.

7. A cutting plate according to one of Claims 1 to 5, characterised in that the cutting plate contains as mechanically resistant material from 15 to 22 % by volume of titanium nitride.

8. A cutting plate according to one of Claims 1 to 5, characterised in that the cutting plate contains as mechanically resistant material from 15 to 22 % by volume of a mixture consisting of titanium carbide and titanium diboride.

9. A cutting plate according to one of Claims 1 to 5, characterised in that the cutting plate contains from 15 to 22 % by volume of a mixture of titanium nitride and titanium diboride.

10. A cutting plate according to one of Claims 1 to 9, characterised in that the cutting plate is hot-pressed.

11. A cutting plate according to one of Claims 1 to 9, characterised in that the cutting plate is sintered without pressure and contains metal oxide compounds in an amount of at least 3 % by volume.

12. A cutting plate according to one of Claims 1 to 11, characterised in that the cutting plate has a bending strength $\sigma_B$ at room temperature of $>$ 350 MPa and at 1200°C of $>$ 300 MPa.

13. The use of the cutting plate according to one of Claims 1 to 12 for the machining of ferrous metals up to a C-content of 1,2 %.

## Revendications

1. Plaquette de coupe pour l'usinage de matériaux ferreux, constituée d'un matériau céramique fritté contenant au moins 70 % en volume de nitrure d'aluminium, dans lequel sont uniformément répartis, en tant qu'alliages durs, des carbures, nitrures et borures de titane, de tungstène et de niobium et, en tant que constituants supplémentaires, des composés oxydes métalliques, caractérisée en ce que les alliages durs sont présents en une quantité de 7 à 29 % en volume, les composés oxydes métalliques sont présents en une quantité de 1 à 15 % en volume, leurs concentrations, avec celle du nitrure d'aluminium, atteignant au moins 99,7 %, la plaquette de coupe ne contenant pas plus de 0,3 % en volume d'impuretés et présentant une dureté Mohs supérieure à 9.

2. Plaquette de coupe selon la revendication 1, caractérisée en ce qu'elle contient comme alliages durs du carbure de titane, du nitrure de titane, du diborure de titane, du carbure de tungstène, du carbure de niobium, du borure de niobium ou un mélange de ces substances.

3. Plaquette de coupe selon l'une des revendications 1 ou 2, caractérisée en ce qu'elle contient des alliages durs en une quantité de 10 à 25 % en volume.

4. Plaquette de coupe selon l'une des revendications 1 à 3, caractérisée en ce qu'elle contient comme composés oxydes métalliques de l'oxyde d'yttrium, de l'oxyde d'aluminium, de l'oxyde de calcium et du dioxyde de silicium.

5. Plaquette de coupe selon l'une des revendications 1 à 4, caractérisée en ce qu'elle contient des composés oxydes métalliques en une quantité de 2 à 8 % en volume.

6. Plaquette de coupe selon l'une des revendications 1 à 5, caractérisée en ce qu'elle contient en tant qu'alliage dur de 15 à 22 % en volume de carbure de titane.

7. Plaquette de coupe selon l'une des revendications 1 à 5, caractérisée en ce qu'elle contient comme alliage dur de 15 à 22 % en volume de nitrure de titane.

8. Plaquette de coupe selon l'une des revendications 1 à 5, caractérisée en ce qu'elle contient comme alliage dur de 15 à 22 % d'un mélange constitué de carbure de titane et de diborure de titane.

9. Plaquette de coupe selon l'une des revendications 1 à 5, caractérisée en ce qu'elle contient de 15 à 22 % d'un mélange de nitrure de titane et de diborure de titane.

10. Plaquette de coupe selon l'une des revendications 1 à 9, caractérisée en ce qu'elle est pressée à chaud.

11. Plaquette de coupe selon l'une des revendications 1 à 9, caractérisée en ce qu'elle est frittée sans pression et qu'elle contient des composés oxydes métalliques en une quantité d'au moins 3 % en volume.

12. Plaquette de coupe selon l'une des revendications 1 à 11, caractérisée en ce qu'elle présente une résistance à la rupture par flexion $\sigma_B$ supérieure à 350 MPa à la température ambiante et supérieure à 300 MPa à 1200°C.

13. Utilisation de la plaquette de coupe selon l'une des revendications 1 à 12 pour l'usinage, par enlèvement de copeaux, de métaux ferreux ayant une teneur en carbone inférieure ou égale à 1,2 %.